# FASCICULE DE BREVET EUROPEEN

(11) **EP 3 621 431 B1**
(45) Date de publication et mention de la délivrance du brevet: **06.12.2023**
(21) Numéro de dépôt: 18722571.9
(22) Date de dépôt: 12.05.2018
(51) Int. Cl.: A01K 15/02

(54) **PROCÉDÉ D'UTILISATION D'UN DISPOSITIF POUR LA COLLECTE ET LA RESTITUTION DE MOLÉCULES ODORANTES**
VERWENDUNGSVERFAHREN EINER VORRICHTUNG ZUR SAMMLUNG UND FREISETZUNG VON GERUCHSMOLEKÜLEN
METHOD OF USING A DEVICE FOR THE COLLECTION AND RELEASE OF ODOROUS MOLECULES

(30) Priorité: 12.05.2017 FR 1770489
(43) Date de publication de la demande: 18.03.2020
(73) Titulaire: Biodesiv Sàrl, 2000 Neuchâtel (CH)
(72) Inventeur: COURRIER, Quentin, 67210 Obernai (FR)
(74) Mandataire: Cabinet Laurent & Charras
(86) Numéro de dépôt international: PCT/EP2018/062277
(87) Numéro de publication internationale: WO 2018/206808

(56) Documents cités:
- EP-A1- 0 332 537
- WO-A2-03/105652
- CA-A1- 2 238 115
- RU-C1- 2 526 124
- US-A1- 2014 311 218

## Description

La présente invention décrit l'utilisation comme dispositif de collecte et de restitution de molécules odorantes d'intérêt pour assurer l'entraînement d'un animal à la détection de ces molécules odorantes d'intérêt, qui est facile d'usage, de fabrication et d'imprégnation. Ce dispositif permet la collecte et la restitution d'une infinité d'odeurs par utilisation de molécules odorantes réelles donc non synthétiques. Lesdites odeurs sont stockées dans le dispositif pour une utilisation immédiate ou ultérieure. L'invention décrit également un procédé pour l'entraînement d'animaux, notamment de chiens, à la détection de molécules odorantes par mise en oeuvre du dispositif selon l'invention.

Dans le domaine des dispositifs de collecte et de restitution de molécules odorantes nous nous intéresserons plus particulièrement à leur utilisation pour l'entrainement d'animaux, en particulier de chiens de travail, à la détection d'odeurs d'intérêt.

L'entrainement de chiens pour la détection d'odeurs consiste à apprendre au chien à reconnaître spécifiquement une ou plusieurs odeurs dans un environnement donné, afin qu'il la marque. Pour cela, plusieurs protocoles d'entrainement sont employés, ces derniers sont le plus souvent basés sur le renforcement par l'intermédiaire du jeu ou la remise de récompenses. Il existe cependant des dispositifs plus sophistiqués destinés à l'entraînement de chiens de travail dont la mission sera la détection de molécules odorantes d'intérêt.

Il est connu de l'art antérieur d'utiliser des supports imbibés comme une éponge, de la mousse, des fibres de coton, un tissu etc. pour familiariser l'animal avec certaines odeurs d'intérêt mais ceci implique non seulement de manipuler les substances sources ce qui peut être problématique pour les stupéfiants ou les explosifs par exemple, mais aussi d'exposer directement l'animal auxdites substances sources ce qui peut également être préjudiciable.

Les dispositifs d'entraînement existants sont souvent efficaces mais ne peuvent être utilisés avec toutes sortes de molécules odorantes. Par ailleurs certains ne peuvent pas être réutilisés pour répéter les sessions d'entrainement et sont parfois très coûteux. Certains d'entre eux mettent en oeuvre uniquement des molécules odorantes synthétiques qui sont donc différentes des molécules odorantes réelles auxquelles l'animal va être confronté dans le cadre de sa mission.

Ainsi le brevet GB2434072 décrit un dispositif d'entraînement pour chiens qui est commandé à distance et qui comprend une boîte à laquelle est fixé un récepteur radio à deux canaux et une servocommande. Le dispositif comprend également un émetteur radio à deux voies. Une balle de tennis peut être placée dans la partie supérieure de la boîte de sorte qu'elle repose sur un ressort amovible. Lorsque le couvercle de la boîte est fermé, il enfonce la balle sur le ressort. Sur réception d'un signal radio de l'émetteur soit la balle est libérée, soit un «clic» sonore est émis en fonction du choix sur l'émetteur. Une boîte à odeur amovible peut être fixée à la boîte principale. C'est un dispositif de conditionnement de l'animal avec récompense dont l'obtention est décidée à distance.

La demande de brevet US2016081302 décrit un dispositif d'entraînement pour chiens constitué de deux parties. L'une est un boîtier fabriqué en un matériau éventuellement susceptible d'absorber une odeur (bois, papier ondulé épais, carton, etc.), l'autre est un conteneur qui doit conserver un matériel pouvant émettre une odeur et ledit conteneur est placé dans le boîtier. Le conteneur est réalisé en un matériau imperméable aux odeurs et présente des ouvertures pour que les molécules odorantes puissent pénétrer l'atmosphère du boîtier. Ces boîtiers sont destinés à être fixés le long d'un parcours afin d'être détectés par le chien.

La demande de brevet US2014014044 décrit un dispositif pour entraîner les chiens à retrouver des bois perdus par leurs animaux porteurs, et ce grâce à leur odeur. Ce dispositif comprend un outil de récupération ressemblant à un bois qui émet une odeur de bois de cerf. Ce dispositif est limité à une source de molécules odorantes couplée à une forme à rechercher.

Le brevet US7146934 décrit un champignon réalisé en un matériau synthétique pour l'entraînement d'un chien à la détection de champignons. Ledit champignon est destiné à recevoir des odeurs de champignons à détecter pour que le chien associe forme et odeur correspondante. Le matériau synthétique est un élastomère non toxique pour le chien. Le dispositif est moulé avec un intérieur creux et une multitude de trous pour diffuser l'odeur de champignon dans l'atmosphère. Dans cet espace creux peuvent être placés des champignons frais ou séchés, ou un support (éponge, mousse, fibres de coton) imbibé d'extrait de champignon pour entraîner le chien à détecter l'odeur correspondante en milieu naturel. On utilise ici une substance réelle qui n'est pas imprégnée sur un support.

Il est d'usage courant pour les éducateurs de chiens de travail d'utiliser des tubes en polychlorure de vinyle bouchés aux extrémités et percés de trous qui sont remplis de la substance à détecter (de la résine de cannabis par exemple) pour que le chien ne soit pas en contact direct avec la substance mais uniquement avec les molécules odorantes. On utilise également ici une substance réelle qui n'est pas imprégnée sur un support.

Pour ce qui est des substances imprégnées sur un support, plusieurs dispositifs et méthodes existent.

La société française SEJEWO commercialise des tubes pour l'entraînement de chiens de travail, sur lesquels sont fixées des microparticules de substances réelles (sous la marque commerciale SOKKS-MPTS^{®}). Le support est un tube en polypropylène microporeux et toute une gamme de molécules odorantes sont proposées (explosifs et armes à feu, stupéfiants, cadavres et sang humain, monnaie, produits accélérateurs d'incendie, puces de lit, moisissures, termites, etc.). Ces dispositifs sont performants mais mettent l'animal en présence de microparticules de substances réelles. De plus ils sont coûteux et non réutilisables.

Il est également connu d'utiliser un contact direct ou un solvant pour adsorber des molécules odorantes depuis une source vers un matériau adsorbant. On citera à titre d'exemple la gaze ou « Coton Hollandais » qui permet une adsorption de molécules odorantes par diffusion dans l'atmosphère ambiante depuis une source émettant des odeurs d'intérêt vers la surface d'un matériau à grande surface spécifique comme des fibres de coton. Ceci est notamment utilisé pour la recherche de personnes disparues ou recherchées par les forces de police, lorsqu'on dispose d'une source fiable (un vêtement, un objet, etc.). Ces odeurs sont volatile et la gaze est non réutilisable, par ailleurs l'animal est mis en présence d'une substance réelle et de solvants.

Le brevet US2010242859 décrit une méthode de renforcement positif pour entraîner un chien à mâcher ou saisir certains objets dans leur bouche en utilisant des extraits d'urine d'animaux sauvages ou nuisibles dilués dans de l'eau et répandus sur ledit objet. Il s'agit là d'une mise en contact directe de la source de l'odeur avec l'animal avec toutes les limites que cela comporte. De plus le renforcement est associé à un objet.

Le brevet RU 2526124 décrit un dispositif pour l'entraînement de chiens de travail à la détection de substances explosives telles le trinitrotoluène (TNT) et/ou la cyclotriméthylènetrinitramine (RDX). Un mélange de substance explosive avec un substrat inerte présentant une structure poreuse est réalisé afin de répartir la substance explosive à la surface du substrat. Ce document décrit un substrat inerte sous forme dispersée (poudre, charbon actif pulvérisé, etc.) de type gel de silice, charbon actif, ou oxyde d'aluminium. Ce substrat recouvert de la substance explosive est alors conditionné dans un contenant de type sachet ou boîte réalisé en un matériau polymère, le contenant étant ensuite scellé. Le polymère constitutif du contenant est sélectionné pour être perméable à l'air afin que les odeurs d'explosifs diffusent à travers la paroi du contenant. Il s'agit la d'adsorption de substances explosives émettrices d'odeurs sur un support inerte et d'émission à travers un contenant réalisé en un matériau polymère perméable aux odeurs. Ce dispositif contient la substance explosive adsorbée sur le support et le polymère n'absorbe pas les molécules odorantes.

Le brevet US2014311218 décrit la fabrication de pseudo-odeurs de stupéfiants. Ceci est réalisé par absorption de molécules odorantes par diffusion dans l'air en utilisant un solvant ou par contact direct entre le matériau source et le matériau absorbant. L'encapsulation de molécules odorantes dans un gel ou une émulsion peut également être envisagée. Là encore l'animal est mis en présence d'une substance réelle toxique seule ou accompagnée d'un solvant.

Toutes ces méthodes et dispositifs utilisent un support présentant l'odeur ou les molécules odorantes à détecter.

Lesdites molécules odorantes sont soit réelles, soit synthétiques. Dans le cas des molécules odorantes réelles on utilise directement la source de l'odeur (sous forme fraîche, sèche, en extrait, etc.) alors que les odeurs synthétiques ou pseudo-odeurs font appel à une odeur de synthèse simulant l'odeur de la substance réelle à détecter.

Actuellement sur le marché des dispositifs d'entraînement pour animaux de travail on trouve principalement des cotons à imprégner, des tubes pré-imprégnés par des substances réelles ou synthétiques ou des substance synthétiques sous forme de poudre, de liquide ou de kits. Avec les substances réelles utilisées en tant que telles, ce sont les principaux outils utilisés pour l'entraînement de chiens de détection.

Il demeure donc certains inconvénients à toutes les méthodes et dispositif précités. En effet dans le cas de l'utilisation de substances réelles en tant que telles (sans support), la possession et la manipulation de certaines d'entre elles est dangereuse, interdite ou nécessite l'obtention d'autorisations administratives (ex. stupéfiants, explosifs, cadavres, etc.). De plus il peut être difficile de se procurer certaines des substances nécessaires à l'entraînement des animaux de détection (ex. urine d'animaux sauvages, etc.). Enfin, les substances réelles utilisées en grande quantité afin d'assurer un entraînement complet de l'animal, peuvent être dangereuses pour l'animal, notamment en cas d'ingestion mais également en cas d'exposition prolongée.

Dans le contexte des odeurs imprégnées sur un support, le choix des odeurs disponibles commercialement est limité. De plus les supports existants dans le commerce ont une capacité d'absorption et/ou d'adsorption limitée et on trouve essentiellement des supports réalisés en un matériau adsorbant. Ceci entraîne le fait que le relargage des molécules odorantes est rapide et non constant.

Par ailleurs et comme déjà indiqué ci-dessus, les odeurs synthétiques sont non représentatives des odeurs réelles et peuvent mener à des erreurs dans la détection des substances réelles. Le fait de pouvoir travailler systématiquement avec des molécules odorantes dont la source est réelle serait un plus.

La présente invention propose un dispositif d'imprégnation et de relargage (également appelés absorption et désorption) de molécules odorantes d'intérêt qui est facile et peu coûteux à réaliser, à imprégner et à mettre en oeuvre. L'imprégnation se fait par simple exposition du dispositif près de la substance à détecter, ou par contact en fonction de la source de molécules odorantes d'intérêt, ce qui permet une imprégnation facile d'une infinité d'odeurs. La manipulation de substances sources dangereuses, interdites ou nécessitant des autorisations administratives est très limitée car seules les molécules odorantes émises par la substance réelle sont collectées, ce qui correspond aux molécules odorantes détectées par l'animal en situation de travail. Enfin le dispositif selon l'invention permet la collecte ou imprégnation d'odeurs réelles et leur stockage en vue d'une utilisation ultérieure. Ainsi l'animal n'est jamais en contact avec la substance pure et ne peut donc ni l'ingérer, ni être intoxiqué.

Le dispositif selon l'invention est un dispositif de collecte et de restitution de molécules odorantes réelles d'intérêt qui est constitué d'un polymère ou d'un mélange de polymères présentant une neutralité olfactive, ledit dispositif est ensuite mis en présence d'une source de molécules odorantes réelles par l'utilisateur afin d'absorber lesdites molécules odorantes d'intérêt dans le maillage de son réseau polymérique. La source de molécules odorantes peut ensuite être retirée car le dispositif de collecte est imprégné des molécules odorantes émises par cette source et peut être utilisé notamment à des fins d'entraînement à la détection des molécules odorantes qu'il contient.

Les molécules odorantes réelles ne sont pas simplement adsorbées sur le dispositif mais absorbées dans le dispositif. Une grande quantité de molécules odorantes peut ainsi être stockée puis restituée lors de l'utilisation du dispositif. La structure du ou des polymères utilisé(s) est différente de la structure des molécules odorantes d'intérêt à collecter et relarguer pour ne pas tromper l'animal, toutefois elle demeure chimiquement compatible avec la molécule d'intérêt pour qu'il puisse y avoir absorption. La molécule odorante d'intérêt est donc au moins partiellement soluble dans le(s) polymère(s) constituant le dispositif pour pouvoir y être absorbée et stockée de manière passive.

Le dispositif selon l'invention n'est pas préimprégné par une odeur naturelle ou synthétique (pseudo-odeur) lorsqu'il est proposé aux utilisateurs et il ne contient pas de particules de matière réelle source de molécules odorantes. Il se démarque ainsi de ce qui est décrit dans l'art antérieur. La mise en oeuvre du dispositif est réalisée en atmosphère contrôlée pour limiter la contamination du matériau polymère et son conditionnement permet de préserver le dispositif de toute contamination. C'est l'utilisateur qui va sélectionner la source de molécules odorantes réelles et réaliser l'étape d'imprégnation en fonction de ses besoins.

Les termes imprégnation et absorption sont considérés comme équivalents dans le cadre de la présente invention. Ils sont employés indifféremment ci-après ainsi que toutes leurs déclinaisons comme imprégnable, absorbable, imprégné, absorbé, etc. L'absorption ici s'entend d'un processus dans lequel des molécules odorantes pénètrent dans un réseau polymérique solide. Ce phénomène est différent de l'adsorption qui est un processus dans lequel les molécules adsorbées restent en surface. Comme détaillé précédemment l'art antérieur propose plusieurs techniques mettant en oeuvre le phénomène d'adsorption et non celui d'absorption.

La présente invention met en oeuvre un matériau au sein duquel il est possible de capter, stocker en grande quantité puis relarguer efficacement les différentes molécules qui composent une odeur d'intérêt. Ledit matériau est un polymère pur ou un mélange de polymères, des additifs peuvent éventuellement y être ajoutés. Ce matériau présente une haute capacité d'absorption de molécules odorantes de différentes natures, que celles-ci soient polaires ou apolaires. Il présente également la capacité de relarguer les molécules odorantes qu'il contient de manière contrôlée en débit et en durée. Enfin il est facile à mettre en oeuvre par les procédés classiques de mise en oeuvre des polymères, à savoir et de manière non limitative : extrusion, filage, injection, pressage, casting, rotomoulage, extrusion soufflage, étirage soufflage, extrusion gonflage, thermoformage, moulage par compression, etc.

Dans le cas d'une réalisation du dispositif en un mélange de polymères, si ces derniers ne sont pas miscibles alors ils sont mélangés dans des proportions relatives permettant l'obtention d'un réseau polymérique co-continu. Dans ce contexte les polymères du mélange sont présents à la surface pour être au contact des molécules odorantes à capter lors de l'imprégnation et relarguer les molécules captées lors de l'utilisation. Chaque type de polymère formant un réseau continu, les molécules odorantes peuvent donc par diffusion être stockées dans tout le volume de la matière du dispositif selon l'invention.

Les matériaux polymères utilisés pour réaliser un dispositif selon l'invention peuvent être des polymères naturels, artificiels ou synthétiques. Dans un mode de réalisation préféré le ou les polymères utilisés sont un ou des polymères artificiels. Il peut toutefois être envisagé un mélange entre au moins deux polymères de différentes natures (ex. polymère naturel avec polymère synthétique). Parmi les polymères naturels on trouve les polysaccharides, les glycosamininoglycanes, la lignine, les acides nucléiques, les scléroprotéines, le caoutchouc naturel et les polyhydroxyalkanoates. Les polymères artificiels les plus connus sont l'acétate de cellulose et la nitrocellulose. Les polymères synthétiques les plus courants sont les polyoléfines, les polymères vinyliques, les polymères styréniques, les polyesters, les polyamides, les polyuréthanes, les polycarbonates, les polymères acryliques, les polymères aminoplastes et phénoplastes, les polyacétals, les polymères silicones, les polyimides, les polymères halogénés, les polydiméthylsiloxane, les époxydes, les polymères thermostables, les élastomères et les polymères électroactifs. Selon l'invention le matériau polymère est sélectionné parmi le polyether-bloc-amide ou PEBA, un mélange de polyether-bloc-amide avec un ou plusieurs polymères de type polyoléfine (polyéthylène ou poypropylène), un mélange de polyether-bloc-amide avec un ou plusieurs polymères de type silicone (PDMS), un mélange de polyether-bloc-amide avec un ou plusieurs polymères aromatiques, par exemple et de manière non limitative un polystyrène ou un mélange de polyether-bloc-amide avec un ou plusieurs polymères. Plus généralement le polymère ajouté au PEBA est choisi parmi ceux permettant d'absorber puis de relarguer une ou plusieurs molécules odorantes spécifiques à une application. Dans un mode de réalisation préféré le matériau choisi est le PEBA seul ou un combinaison avec un autre polymère.

Dispositif de collecte et de restitution de molécules odorantes réelles d'intérêt caractérisé en ce qu'il est constitué d'un polymère ou d'un mélange de polymères présentant une neutralité olfactive sélectionné parmi les polyoléfines, les polymères vinyliques, les polymères styréniques, les polyesters, les polyamides, les polyuréthanes, les polycarbonates, les polymères acryliques, les polymères aminoplastes et phénoplastes, les polyacétals, les polymères silicones, les polyimides, les polymères halogénés, les polydiméthylsiloxane, les époxydes, les polymères thermostables, les élastomères et les polymères électroactifs; que ledit dispositif est mis en présence d'une source de molécules odorantes réelles afin d'absorber lesdites molécules odorantes dans le maillage de son réseau polymérique ; que la source de molécules odorantes réelles est ensuite définitivement écartée du dispositif ; et que les molécules odorantes d'intérêt préalablement absorbées sont restituées par le dispositif en l'absence de la source de molécules odorantes réelles.

Selon la présente invention le dispositif de collecte et de restitution de molécules odorantes réelles d'intérêt est constitué d'un polymère ou d'un mélange de polymères présentant une neutralité olfactive sélectionné parmi le polyéther-bloc-amide (PEBA) ou un mélange de polyether-bloc-amide avec un ou plusieurs polymères; que ledit dispositif est mis en présence d'une source de molécules odorantes réelles afin d'absorber lesdites molécules odorantes dans le maillage de son réseau polymérique ; que la source de molécules odorantes réelles est ensuite définitivement écartée du dispositif ; et que les molécules odorantes d'intérêt préalablement absorbées sont restituées par le dispositif en l'absence de la source de molécules odorantes réelles.

L'utilisateur manipulant le dispositif ne sera aucunement mis en présence de la source de molécule odorante d'intérêt de même que l'animal avec lequel le dispositif est utilisé ne sera aucunement mis en présence de la source de molécule odorante d'intérêt. En effet, suite à la phase d'imprégnation ou absorption et avant la restitution, la source de molécules odorantes d'intérêt est définitivement écartée du dispositif.

De plus le polymère constituant le dispositif selon l'invention est mis en présence de la source de molécules odorantes d'intérêt sans jamais y être mélangé. En effet après imprégnation ou absorption, la source de molécules odorantes d'intérêt est définitivement écartée du dispositif.

La présente invention permet donc d'éviter la manipulation de matériaux source de molécules odorantes d'intérêt qui pourraient être délicats ou dangereux pour l'utilisateur et pour l'animal.

Afin d'augmenter la surface spécifique du dispositif pour diminuer le temps de collecte ou augmenter la vitesse de relargage des molécules odorantes, plusieurs options peuvent être envisagées. Le matériau polymère peut être moussé lors de sa mise en oeuvre. Le moussage peut s'effectuer par voie physique ou chimique. Le matériau peut également être macro, micro ou nano texturé en surface, par une technique mettant en oeuvre le laser, un jet d'eau, un usinage mécanique (fraisage, etc.), un moulage dans un moule possédant la texture désirée (injection, pressage, étampage), ou par extrusion via une filière possédant la texture désirée. Le matériau peut également être imprimé en 3D.

Le dispositif selon l'invention peut être décliné sous différentes formes suivant l'usage qui va en être fait. L'imprégnation se faisant par diffusion dans l'atmosphère ambiante de molécules odorantes d'intérêt il convient de choisir une forme apte à recevoir de façon optimale lesdites molécules odorantes. Il est à noter que si le dispositif présente des aspérités pouvant augmenter sa surface spécifique, alors la vitesse de collecte et de relargage peuvent être améliorées. Des angles et des aspérités peuvent faciliter l'utilisation du dispositif en fonction du procédé de collecte ou de restitution des molécules odorantes choisi. Ainsi on citera à titre d'exemple non limitatif de forme adéquate un tube, un jonc, une pastille, un film, une sphère pleine ou creuse, un fil, un assemblage de fils tissés ou non tissés, des granulés, des flocons, de la poudre, ou une mousse. Toute forme peut être envisagée à condition qu'elle permette la collecte, le stockage et la restitution de molécules odorantes d'intérêt de façon efficace. Dans un mode de réalisation particulier le dispositif présente une forme sélectionnée parmi un tube, un jonc, une pastille, un film, une sphère pleine ou creuse, un fil, un assemblage de fils tissés ou non tissés, des granulés, des flocons, de la poudre, ou une mousse. Dans un autre mode de réalisation particulier le dispositif présente une forme sélectionnée parmi un tube, une plaquette en PEBA/PP ou mousse en PEBA/PP. Dans un mode de réalisation préféré le dispositif selon l'invention est un tube.

Le matériau polymère une fois en forme est facilement imprégnable par les molécules odorantes réelles. Le dispositif selon l'invention permet la collecte et la restitution de molécules odorantes issues de sources d'odeurs réelles. L'absorption peut se faire suite à une simple exposition du dispositif selon l'invention à la source des molécules odorantes d'intérêt pendant une période donnée. Ceci sera particulièrement approprié pour une utilisation du dispositif pour l'entrainement de chiens à la détection de substances telles les stupéfiants, les armes, les munitions, etc. L'absorption peut également se faire par contact entre le dispositif et la source de molécules odorantes d'intérêt pendant une période donnée. Ceci sera particulièrement approprié pour l'utilisation du dispositif afin d'entraîner des chiens à la détection de tumeurs ou de molécules odorantes spécifiques de certaines pathologies humaines (ex. diabète). Ainsi dans un mode de réalisation particulier du dispositif de collecte et de restitution de molécules odorantes réelles, l'imprégnation ou absorption se fait par exposition du dispositif à une source de molécules odorantes réelles d'intérêt pendant une durée donnée. Dans un autre mode de réalisation particulier du dispositif de collecte et de restitution de molécules odorantes, l'imprégnation ou absorption se fait par contact du dispositif avec une source de molécules odorantes réelles d'intérêt pendant une durée donnée.

Dans le dispositif de collecte et de restitution de molécules odorantes, la restitution des molécules odorantes d'intérêt se fait par simple exposition du dispositif imprégné à l'atmosphère ambiante. Cette exposition peut être longue ou courte en fonction de l'utilisateur. Une fois que toutes les molécules odorantes auront été restituées par le dispositif, une nouvelle imprégnation pourra être réalisée par l'utilisateur, idéalement avec la même source de molécules odorantes d'intérêt.

Les sources de molécules odorantes d'intérêt sont typiquement les produits stupéfiants (essentiellement les substances opiacées, les narcotiques et les euphorisants), les explosifs, les armes (en particulier l'huile employée pour lubrifier l'arme et les résidus de poudre), les munitions, les éléments caractéristiques de cadavres humains, le sang humain, les urines d'animaux sauvages, les tumeurs humaines, les éléments pathogènes spécifiques d'une pathologie donnée (ex. détection d'une chute du taux de glycémie dans le cadre d'un diabète, épilepsie, cancer, etc.), les billets de banque, les moisissures, et les parasites (ex. puces de lit, termites). Il existe une multitude de possibilités et de sources de molécules odorantes d'intérêt. Dans un mode de réalisation particulier le dispositif de collecte et de restitution de molécules odorantes est mis en présence d'une source de molécules odorantes choisie parmi les stupéfiants, les explosifs, les armes, les munitions, les éléments caractéristiques de cadavres humains, le sang humain, les urines d'animaux sauvages, les tumeurs humaines, les éléments pathogènes spécifiques d'une pathologie donnée, les billets de banque, les moisissures, et les parasites.

La présente invention décrit également un kit ou trousse pour assurer l'entraînement d'un animal à la détection de molécules odorantes d'intérêt, qui contient :
- un dispositif de collecte et de restitution de molécules odorantes d'intérêt tel que décrit ci-dessus, et
- une source de molécules odorantes qui est extérieure au dispositif,
ladite source de molécules odorantes étant soit mise en présence du dispositif, soit mise en contact avec le dispositif afin que l'utilisateur puisse réaliser l'étape d'imprégnation du dispositif.

Ainsi l'utilisateur dispose d'un kit complet pour la mise en oeuvre du dispositif selon l'invention à savoir le dispositif de collecte et de restitution de molécules odorantes ainsi que la source de molécules odorantes d'intérêt qu'il pourra utiliser à sa guise en fonction de ses besoins. Ceci est évidemment limité à l'utilisation de source de molécules odorantes qui ne sont pas soumises à des restrictions d'usage (ex. stupéfiants) et de manipulation (ex. explosifs, armes).

Le dispositif selon l'invention permet l'absorption des molécules odorantes d'intérêt et pas simplement leur adsorption sur le dispositif. Ceci permet une collecte et un stockage des molécules odorantes dans l'ensemble du dispositif, quelle que soit sa forme, et enfin la restitution des molécules odorantes sur une certaine durée. Sa mise en oeuvre dans un contexte de neutralité olfactive permet ensuite de collecter des molécules odorantes de toute nature et également de disposer d'un « blanc » ou d'une référence lorsque le dispositif est utilisé pour l'éducation de chiens de détection. La méthode est donc très simple et consiste à collecter des molécules odorantes d'intérêt avec un ou plusieurs dispositifs selon l'invention, puis dissimuler lesdits dispositifs imprégnés ainsi que des dispositifs témoins non imprégnés dans une pièce ou sur un terrain d'entraînement. Si un animal de détection déjà entraîné à détecter l'odeur d'intérêt marque les dispositifs imprégnés et ignore les dispositifs non imprégnés, alors les dispositifs sont adaptés pour entraîner d'autres animaux à la détection.

L'invention décrit également un procédé pour assurer l'entraînement d'un animal à la détection de molécules odorantes d'intérêt, qui consiste à exploiter les propriétés du dispositif de collecte et de restitution de molécules odorantes selon l'invention pour éduquer ledit animal à reconnaître systématiquement ladite molécule odorante même en l'absence du dispositif selon l'invention. Les animaux sont mis en présence d'un ou plusieurs dispositifs selon l'invention qui sont imprégnés par la molécule odorante d'intérêt. Dans un premier temps ils sont récompensés lorsqu'ils parviennent à la reconnaître. Ils sont ensuite entraînés à reconnaître cette odeur dans un milieu ouvert hors la présence du dispositif selon l'invention. Là encore si la détection est correcte l'animal est récompensé. L'animal présentant des capacités de détection d'odeur bien supérieures à celle de l'être humain, il parviendra quasi systématiquement à détecter l'odeur pour laquelle il a été entraîné en milieu ouvert, c'est-à-dire en dehors d'un contexte d'entraînement.

Dans un mode de réalisation préféré ce procédé est appliqué à l'entraînement d'un chien.

Les avantages du dispositif selon l'invention sont donc nombreux. Il permet la collecte d'une grande quantité de molécules odorantes issues d'une substance réelle, du fait de leur absorption et pas seulement de leur adsorption sur la surface, contrairement aux gazes, cotons et supports non absorbant de l'art antérieur. Il permet la collecte d'une grande variété de molécules odorantes. Les odeurs étant des mélanges complexes de plusieurs molécules, les matériaux polymères permettent l'absorption d'une grande variété de molécules. La capacité à absorber encore plus de molécules peut être obtenue par le mélange avec un matériau d'une autre nature chimique, capable d'absorber d'autres éléments chimiques (ex. PDMS, polyoléfine, polymère aromatique). Il permet la restitution fidèle de l'odeur de la substance réelle à détecter sur le court et long terme, contrairement aux pseudo-odeurs. Le dispositif est disponible sous forme non imprégné pour servir de blanc lors des essais pour éviter au chien de reconnaître l'odeur du dispositif et non de la substance qui l'imprègne. Les tubes pré-imprégnés commerciaux ne proposant pas de tubes vierges. Il offre aux utilisateurs la possibilité d'imprégner une quantité infinie d'odeurs en fonction de leurs besoins. Sa mise en oeuvre est facile, selon les procédés classiques de formulation et de mise en oeuvre des polymères. Il permet de limiter la manipulation de substances réelles, qui peuvent être dangereuses, interdites, soumises à autorisation, difficile à se procurer. Enfin il permet de limiter l'exposition des animaux de détection aux substances réelles pures en grande quantité.

Selon l'usage que l'utilisateur souhaite faire du dispositif selon l'invention, la forme et la matériau choisi pour le dispositif pourront varier. Ainsi un dispositif en forme de tube ou de jonc sera parfaitement adapté pour l'entraînement de chiens de détection ou pour la collecte de molécules odorantes. Un dispositif en forme de pastille, de plaquette ou de film sera plutôt adapté pour la collecte de molécules odorantes se trouvant sur une surface telle que la peau ou un objet à analyser (siège de véhicule, vêtement, etc.). Une sphère pleine ou creuse sera particulièrement adaptée pour l'entraînement de chiens de détection ou de chasse, notamment pour les chiots qui associeront la balle au jeu. Dans un mode de réalisation particulier le dispositif de collecte et de restitution de molécules odorantes présente une forme facilement imprégnable qui est sélectionnée parmi un tube, un jonc, un fil, un assemblage de fils tissés ou non tissés, une pastille, un film, une sphère pleine ou creuse, des granulés, des flocons, de la poudre, ou une mousse.

Les exemples suivants sont donnés à titre indicatif afin de montrer des exemples de réalisation du dispositif selon l'invention. Ils ne sont en aucun cas limitatifs.

### Exemple 1 : tube en PEBA pour la détection de stupéfiant

### Mise en oeuvre du dispositif

Extrusion d'un tube en polyéther-bloc-amide ou PEBA, fourni par l'entreprise Arkema^{®} sous la référence PEBAX 2533 SA 01.

L'extrusion se déroule dans un milieu stérile et dépourvu d'odeurs afin de garantir la neutralité olfactive du tube.

Le tube extrudé fait 8,0 mm de diamètre externe, 5,4 mm de diamètre interne et 35 mm de longueur.

Le tube est conditionné dans un emballage imperméable aux odeurs et fermé hermétiquement.

Avant son imprégnation par l'utilisateur, le sachet est ouvert et 50 tubes sont placés dans un pot en verre en présence d'un gramme de résine de cannabis. Le pot est fermé hermétiquement pendant 24h.

### Phase d'entraînement de l'animal à la détection

Dans une pièce d'entrainement, sont cachés :
- 1 tube imprégné (voir ci-dessus)
- 1 tube non imprégné
- 1 échantillon de 1 gramme de résine de cannabis

Successivement deux chiens de détection différents, entraînés chacun sur des substances réelles parcourent la pièce.

Les deux chiens marquent le tube imprégné et la résine de cannabis mais ne marquent pas le tube non imprégné.

L'expérience est renouvelée 3 mois après l'imprégnation et donne lieu aux mêmes résultats.

Le tube a donc la capacité de capter rapidement et facilement les molécules odorantes caractéristiques de la résine de cannabis puis de les restituer fidèlement à l'animal dès la fin du cycle d'imprégnation et durant au moins 3 mois après la fin du cycle d'imprégnation.

Les utilisateurs n'ont pas détecté l'odeur de résine de cannabis sur le tube.

### Exemple 2 : tube en PEBA pour la détection d'explosifs

### Mise en œuvre du dispositif

Extrusion d'un tube en polyéther-bloc-amide ou PEBA, fourni par l'entreprise Arkema^{®} sous la référence PEBAX 2533 SA 01.

L'extrusion se déroule dans un milieu stérile et dépourvu d'odeurs afin de garantir la neutralité olfactive du tube.

Le tube extrudé fait 8,0 mm de diamètre externe, 5,4 mm de diamètre interne et 35 mm de longueur.

Le tube est conditionné dans un emballage imperméable aux odeurs et fermé hermétiquement.

Avant son imprégnation par l'utilisateur, le sachet est ouvert et 50 tubes sont placés dans un pot en verre en présence d'un fragment d'explosif de type TNT. Le pot est fermé hermétiquement pendant 24h.

### Phase d'entraînement de l'animal à la détection

Dans une pièce d'entrainement, sont cachés :
- 1 tube imprégné
- 1 tube non imprégné
- 1 fragment d'explosif de type TNT

Successivement deux chiens de détection différents, entraînés chacun sur des substances réelles parcourent la pièce.

Les deux chiens marquent le tube imprégné et le fragment d'explosif mais ne marquent pas le tube non imprégné.

L'expérience est renouvelée 3 mois après l'imprégnation et donne lieu aux mêmes résultats.

Le tube a donc la capacité de capter rapidement et facilement les molécules odorantes caractéristiques d'un fragment d'explosif de type TNT puis de les restituer fidèlement à l'animal dès la fin du cycle d'imprégnation et durant au moins 3 mois après la fin du cycle d'imprégnation.

Les utilisateurs n'ont pas détecté l'odeur de l'explosif sur le tube.

### Exemple 3 : tube en PEBA moussé pour la recherche de cadavre

### Mise en oeuvre du dispositif

Extrusion d'un tube en polyéther-bloc-amide ou PEBA, fourni par l'entreprise Arkema^{®} sous la référence PEBAX 2533 SA 01.

Dans l'extrudeuse est ajouté 1% d'agent moussant, fourni par l'entreprise Clariant^{®} sous la référence Hydrocerol BIH afin d'obtenir un tube dont la paroi est moussée avec une structure à cellules ouvertes.

2 tubes sont placés pendant 24h près d'un corps humain décédé par noyade dans un sac mortuaire fermé hermétiquement.

### Phase d'entraînement à la détection

Dans une pièce d'entrainement, sont cachés :
- 1 tube imprégné (voir ci-dessus)
- 1 tube non imprégné
- 1 échantillon de 1 gramme de jus de putréfaction prélevé sur le corps du noyé

Successivement deux chiens de détection différents, entraînés chacun sur des substances réelles parcourent la pièce.

Les deux chiens marquent le tube imprégné et le jus de putréfaction mais ne marquent pas le tube non imprégné.

L'expérience est renouvelée 3 mois après l'imprégnation et donne lieu aux mêmes résultats.

Le tube a donc la capacité de capter rapidement et facilement les molécules odorantes caractéristiques de la décomposition d'un corps humain puis de les restituer fidèlement à l'animal dès la fin du cycle d'imprégnation et durant au moins 3 mois après la fin du cycle d'imprégnation.

### Exemple 4 : plaquette en PEBA/PP pour la détection du cancer du sein chez la femme par la transpiration

### Mise en oeuvre du dispositif

Compounding par extrusion sur une extrudeuse bivis, d'un jonc composé d'un mélange :
- Polyéther-bloc-amide ou PEBA, fourni par l'entreprise Arkema sous la référence PEBAX^{®} 2533 SA 01, à hauteur de 46% en masse
- Polypropylène ou PP, fourni par l'entreprise INEOS Olefins & Polymers Europe sous la référence Eltex^{®} MED 100-MG03, à hauteur de 46% en masse
- Polypropylène greffé anhydride maléique ou PP-MAH, fourni par l'entreprise Arkema sous la référence OREVAC^{®} CA100, à hauteur de 8% en masse

Le PEBA et le PP permettent l'absorption de molécules odorantes et le PP-MAH à assurer la compatibilité entre les matières.

L'extrusion se déroule dans un milieu stérile et dépourvu d'odeurs afin de garantir la neutralité olfactive du tube.

Le jonc extrudé est ensuite granulé.

Les granulés sont pressés à chaud dans une presse à plateaux chauffants pour obtenir une plaquette rectangulaire, de 30mm de large par 50mm de long par 0,5mm d'épaisseur.

La plaquette est conditionnée dans un emballage imperméable aux odeurs et fermé hermétiquement.

La plaquette est mise au contact de la peau d'un patient pendant 2h.

Elle est ensuite conditionnée dans un emballage imperméable aux odeurs et fermé hermétiquement.

### Phase d'entraînement

La plaquette est soumise au flair d'un chien entraîné à détecter les molécules odorantes émises par un corps humain atteint d'un cancer du sein.

Si le chien marque la plaquette alors le patient est atteint du cancer du sein.

Du fait de la simplicité du procédé de prélèvement, réalisable par le patient lui-même, il est possible de détecter plus précocement les cancers.

### Exemple 5 : mousse en PEBA/PP imprimée en 3D pour la détection du cancer du sein chez la femme par l'haleine

Comme dans l'exemple 3, un jonc dont le diamètre est compatible avec les imprimantes 3D est produit par extrusion.

Le matériau est ensuite utilisé pour imprimer en 3D une structure de type mousse à cellules ouvertes permettant à l'air expiré de le traverser.

La structure 3D est conditionnée dans un emballage imperméable aux odeurs et fermé hermétiquement.

Le patient expire ensuite au travers de la structure 3D afin de collecter les molécules odorantes de l'haleine.

La structure 3D est ensuite conditionnée dans un emballage imperméable aux odeurs et fermé hermétiquement.

La structure 3D est soumise au flair d'un chien entraîné à détecter les molécules odorantes émises par un corps humain atteint d'un cancer du sein.

Si le chien marque la structure 3D alors le patient est atteint du cancer du sein.

Du fait de la simplicité du procédé de prélèvement, réalisable par le patient lui-même, il est possible de détecter plus précocement les cancers.

## Revendications

1. Utilisation comme dispositif de collecte et de restitution de molécules odorantes réelles d'intérêt polaires et/ou apolaires pour assurer l'entraînement d'un animal à la détection de ces molécules odorantes d'intérêt, le dispositif étant constitué de polyéther-bloc-amide (PEBA) seul ou en mélange avec un polymère ou un mélange de polymères choisis pour être chimiquement compatible avec lesdites molécules odorantes de manière à les absorber dans le maillage de son réseau polymérique puis les relarguer ; et en ce que ledit dispositif présente une neutralité olfactive ;
le ou les polymères sont sélectionnés parmi les polyoléfines, les polymères vinyliques, les polymères styréniques, les polyesters, les polyamides, les polyuréthanes, les polycarbonates, les polymères acryliques, les polymères aminoplastes et phénoplastes, les polyacétals, les polymères silicones, les polyimides, les polymères halogénés, les polydiméthylsiloxanes, les époxydes, les polymères thermostables, les élastomères et les polymères électroactifs.

2. Utilisation selon la revendication 1, **caractérisée en ce que** le polymère ou le mélange de polymères est sélectionné parmi le polypropylène, le polydiméthylsiloxane, un mélange de polyéther-bloc-amide avec un ou plusieurs polymères de type silicone, ou un mélange de polyéther-bloc-amide avec un ou plusieurs polymères aromatiques.

3. Utilisation selon l'une des revendications précédentes, **caractérisée en ce que** le polymère ou le mélange de polymères est moussé, macro texturé, micro texturé ou nano texturé.

4. Utilisation selon l'une des revendications précédentes, **caractérisée en ce que** ledit dispositif est sous une forme sélectionnée parmi un tube, un jonc, un fil, un assemblage de fils tissés ou non tissés, une pastille, un film, une sphère pleine ou creuse, des granulés, des flocons, de la poudre, une mousse, une plaquette.

5. Utilisation selon l'une des revendications précédentes, **caractérisée en ce que** le dispositif est imprégné avec des molécules odorantes réelles polaires et/ou apolaires émises par une source de molécules odorantes réelles.

6. Utilisation selon la revendication 5, **caractérisée en ce que** le dispositif est imprégné avec des molécules odorantes réelles polaires et/ou apolaires par contact ou par exposition dudit dispositif avec une source de molécules odorantes réelles d'intérêt émises par une source de molécules odorantes réelles.

7. Utilisation selon l'une des revendications précédentes, **caractérisée en ce que** les molécules odorantes d'intérêt sont issues d'une source de molécules odorantes choisie parmi les stupéfiants, les explosifs, les armes, les munitions, les éléments caractéristiques de cadavres humains, le sang humain, les urines d'animaux sauvages, les tumeurs humaines, les éléments pathogènes spécifiques d'une pathologie donnée, les billets de banque, les moisissures et les parasites.

## Patentansprüche

1. Einsatz als Vorrichtung zum Sammeln und Freisetzen realer Geruchsmoleküle von Interesse, polar und/ oder unpolar, um das Training eines Tiers zur Erkennung dieser interessanten Geruchsmoleküle sicherzustellen, die Vorrichtung besteht dabei aus Polyetherblockamid (PEBA), alleine oder in einer Mischung mit einem Polymer oder einer Polymermischung, ausgewählt um chemisch kompatibel mit diesen Geruchsmolekülen zu sein, so dass sie in den Maschen des Polymernetzes absorbiert und dann wieder freigesetzt werden; und dadurch, dass diese Vorrichtung eine olfaktive Neutralität aufweist;
das oder die Polymere werden ausgewählt aus den Polyolefinen, Vinylpolymeren. Styrol- Polymeren, Polyestern, Polyamide, Polyurethane, Polycarbonate, Acrylpolymere, Aminoplast - und Phenoplastpolymere, Polyacetale, Silikonpolymere, Polyimide, halogenierte Polymere, Polydimethylsiloxane, Epoxyde, thermostabile Polymere, Elastomere und elektroaktive Polymere.

2. Einsatz nach Anspruch 1, **dadurch gekennzeichnet, dass** das Polymer oder die Polymermischung ausgewählt wird aus Polypropylen, Polydimethylsiloxan, einer Mischung aus Polyetherblockamid mit einem oder mehreren Polymeren von Typ Silikon oder einer Mischung aus Polyetherblockamid mit einem oder mehreren aromatischen Polymeren.

3. Einsatz nach einem der vorangehenden Ansprüche, **dadurch gekennzeichnet, dass** das Polymer oder die Polymermischung geschäumt, makrotexturiert, mikrotexturiert oder nanotexturiert sind.

4. Einsatz nach einem der vorangehenden Ansprüche, **dadurch gekennzeichnet, dass** die Vorrichtung eine Form hat, ausgewählt aus einem Rohr, einem Ring, einem Garn, einer Verbindung von Garnen, gewebt oder nicht gewebt, einer Pastille, einer Folie, einer Vollkugel oder Hohlkugel, Granulat, Flocken, Pulver, Schaum oder einer Plakette.

5. Einsatz nach einem der vorangehenden Ansprüche, **dadurch gekennzeichnet, dass** die Vorrichtung mit realen polaren und/ oder apolaren Geruchsmolekülen, abgegeben von einer realen Quelle der Geruchsmoleküle, imprägniert ist.

6. Einsatz nach Anspruch 5, **dadurch gekennzeichnet, dass** die Vorrichtung mit realen polaren und/ oder apolaren Geruchsmolekülen durch Kontakt oder Exposition dieser Vorrichtung mit einer realen Quelle der entsprechenden Geruchsmolekülen, abgegeben von einer realen Quelle der Geruchsmoleküle, imprägniert ist.

7. Einsatz nach einem der Ansprüche, **dadurch gekennzeichnet, dass** die interessanten Geruchsmoleküle aus einer Geruchsmolekülquelle stammen, die ausgewählt wird aus Rauschgiften, Explosivstoffen, Waffen, Munition, charakteristischen Elementen menschlicher Kadaver, menschlichem Blut, Urin wilder Tiere, menschlichen Tumoren, spezifischen pathogenen Elemente einer bestimmten Pathologie, Banknoten, Schimmelpilzen und Parasiten.

## Claims

1. Use as a device for collecting and rendering real odorous molecules of interest polar and/or non-polar to train an animal to detect these odorous molecules of interest, the device consisting of polyether-block-amide (PEBA) alone or as a mixture with a polymer or a mixture of polymers chosen to be chemically compatible with said odorous molecules so as to absorb them in the mesh of its polymeric network and then release them; and in that said device has an olfactory neutrality;
the polymer (s) are selected from polyolefins, vinyl polymers, styrene polymers, polyesters, polyamides, polyurethanes, polycarbonates, acrylic polymers, aminoplast and phenoplast polymers, polyacetals, silicone polymers, polyimides, halogenated polymers, polydimethylsiloxanes, epoxides, thermostable polymers, elastomers and electroactive polymers.

2. Use according to claim 1, **characterised in that** the polymer or mixture of polymers is selected from polypropylene, polydimethylsiloxane, a mixture of polyether-block-amide with one or more silicone-type polymers, or a mixture of polyether-block-amide with one or more aromatic polymers.

3. Use according to any one of the preceding claims, **characterised in that** the polymer or mixture of polymers is foamed, macro-textured, micro-textured or nano-textured.

4. Use according to any one of the preceding claims, **characterised in that** said device is in a form selected from a tube, a rod, a thread, an assembly of woven or non-woven threads, a patch, a film, a solid or hollow sphere, granules, flakes, powder, a foam, a plate.

5. Use according to any one of the preceding claims, **characterised in that** the device is impregnated with real polar and/or non-polar odorous molecules emitted by a source of real odorous molecules.

6. Use according to claim 5, **characterised in that** the device is impregnated with real polar and/or non-polar odorous molecules by contacting or exposing said device with a source of real odorous molecules of interest emitted by a source of real odorous molecules.

7. Use according any to one of the preceding claims, **characterised in that** the odorous molecules of interest are derived from a source of odorous molecules chosen from narcotics, explosives, weapons, ammunition, the characteristic elements of human corpses, human blood, the urine of wild animals, human tumours, pathogenic elements specific to a given pathology, banknotes, fungi and parasites.
